# EUROPÄISCHE PATENTSCHRIFT

(11) **EP 1 449 723 B1**
(45) Veröffentlichungstag und Bekanntmachung des Hinweises auf die Patenterteilung: **29.11.2006**
(21) Anmeldenummer: 03029987.9
(22) Anmeldetag: 30.12.2003
(51) Int. Cl.: B60R 21/20

(54) **Gassackmodul**
Airbag module
Module de sac gonflable

(30) Priorität: 18.02.2003 DE 10306710
(43) Veröffentlichungstag der Anmeldung: 25.08.2004
(73) Patentinhaber: TRW Automotive Safety Systems GmbH, 63743 Aschaffenburg (DE)
(72) Erfinder: Heist, Helga, 63846 Laufach (DE); Helmstetter, Matthias, 63743 Aschaffenburg (DE); Kreuzer, Martin, 63839 Kleinwallstadt (DE); Werner, Thomas, Shelby Township MI 48315 (US); Lorenz, Christian, 63849 Leidersbach (DE); Schneider, Michael, Dr., 63834 Sulzbach (DE)
(74) Vertreter: Kitzhofer, Thomas

(56) Entgegenhaltungen:
- EP-A- 1 428 732
- EP-A- 1 437 266
- EP-A- 1 607 280
- DE-A- 19 749 914
- DE-U- 20 300 170
- US-A- 5 887 892
- US-A1- 2001 026 065
- US-A1- 2002 084 638

## Beschreibung

Die Erfindung betrifft ein Gassackmodul.

Die Erfindung betrifft insbesondere Gassackmodule, bei denen außenseitig ein metallenes Emblem angebracht ist, welches eine seitliche Ausdehnung hat, die über die seitliche Ausdehnung des Halteteils an dessen abdeckungsseitigen Ende hinausgeht.

Das Distanzstück kann einerseits die Aufgabe haben, einen beim Öffnen des Moduls stationären Mittelabschnitt der Abdeckung zu halten oder andererseits die Modulaußenfläche mit zu definieren. Hintergrund dieser Aufgabe ist die inzwischen übliche Befestigung von metallenen Emblems auf der Vorderseite der Abdeckung oder dem Distanzstück, die relativ schwer und breit sind und sicher am Modul befestigt sein müssen, wenn die Abdeckung aufreißt. Zu diesem Zweck wird der Teil der Abdeckung, der das Emblem trägt, nicht beim Aufreißen der Abdeckung nach außen geschwenkt, sondern bleibt stationär.

Die EP 1 607 280 A und die EP 1 437 266 A offenbaren ein:

Gassackmodul, mit einem ringförmigen Gassack, der im aufgeblasenem Zustand eine ringförmige Kammer hat, die einen zentralen, nicht aufgeblasenen Abschnitt umgibt, und einer Modulabdeckung,
wobei
der Gassack um ein zentrisches Distanzstück herum gefaltet im Modul untergebracht ist, das sich zur Modulabdeckung erstreckt und an seinem, der Modulabdeckung abgewandten Ende an einem Halteteil befestigt ist und sich zum abdeckungsseitigen Ende seitliche nach außen erstreckt, wobei das Halteteil eine Anlagefläche für das Distanzstück hat und der gegenüber der Anlagefläche seitlich vorstehende Teil der Mantelfläche konvex gekrümmt verläuft.

Die Mantelfläche der EP 1428 732 A ist nicht konvex gekrümmd.

Ein weiteres Gassackmodul ist aus der DE 197 49 914 C2 bekannt. Bei diesem Gassackmodul ist das Distanzstück eine Führungshülse, die sich trichterförmig, genauer gesagt zum abdeckungsseitigen Ende hin kegelstumpfförmig nach außen erweitert, um den Gassack beim Entfalten nach außen zu lenken. Die auf das Distanzstück aufgebrachten Kräfte sind jedoch recht hoch.

Die Erfindung schafft ein Gassackmodul, bei dem die Entfaltung im Bereich des Distanzstücks verbessert und die auf das Distanzstück aufgebrachten Kräfte reduziert werden.

Dies wird bei einem Gassackmodul mit den Merkmalen der Anspruchs 1 bereicht. Das Distanzstück hat folglich in dem Abschnitt, der schräg nach außen zur Modulabdeckung verläuft und über das Halteteil seitlich vorsteht, keinen kegelstumpfförmigen Abschnitt.

Das Halteteil hat also eine Anlagefläche für das Distanzstück und der gegenüber der Anlagefläche seitlich vorstehende Teil der Mantelfläche verläuft gekrümmt. Das Distanzstück kann also rückseitig eine plane Stirnseite haben, mit der es am Halteteil befestigt ist. Der seitlich vorstehende Teil sollte jedoch gekrümmt verlaufen, um ein leichtes Entlanggleiten des Gassacks beim Entfalten zu ermöglichen.

Während beim Stand der Technik eine kegelstumpfförmige Mantelfläche vorgesehen ist, sieht die Erfindung eine gekrümmte Mantelfläche vor, d.h. im Längsschnitt eine konvex bogenförmig verlaufende Mantelfläche. Für den Gassack ist es damit leichter, an der Manteloberfläche entlang zu gleiten.

Dabei ist zusätzlich bei der bevorzugten Ausführungsform vorgesehen, dass die Krümmung längs der Mantelfläche unterschiedlich ist. Zum abdeckungsseitigen Ende hin ist sie nämlich zunehmend weniger seitlich nach außen geneigt, d.h. ihre Ausrichtung, die durch eine Tangente bestimmt wird, nähert sich der axialen Richtung, die von dem Halteteil zur Abdeckung verläuft. Bei einem Lenkradmodul ist die axiale Richtung üblicherweise die Lenkradachsrichtung. Damit wird der Gassack nicht wie beim Stand der Technik trichterförmig nach außen entfaltet, vielmehr kann er sich ausschließlich oder fast überwiegend im Bereich seines inneren Randes in Axialrichtung aus dem Modul herausbewegen.

Vorzugsweise ist die gesamte Manteloberfläche von der dem Halteteil zugewandten Stirnseite bis zu der der Abdeckung zugewandten Stirnseite gekrümmt, wobei die Krümmung, wie erwähnt, zum abdeckungsseitigen Ende hin abnehmen kann und die Ausrichtung zunehmend axial ist.

Darüber hinaus könnte jedoch gerade das abdeckungsseitige Ende des Distanzstücks zylindrisch verlaufen.

Das Distanzstück ist im Gegensatz zum Distanzstück nach dem Stand der Technik ein Vollkörper oder ein verrippter Körper, also keine hohle Hülse. Dies erlaubt es, das Distanzstück aus Kunststoff auszuführen.

Gemäß einer Ausführungsform ist das Halteteil ein den Gasgenerator umgebender Käfig, wobei das Halteteil auch der Gasgenerator selbst sein kann, wenn der Käfig entfällt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch ein erfindungsgemäßes Gassackmodul mit aufgeblasenem Gassack,
- Figur 2 eine perspektivische Draufsicht auf den aufgeblasenen Gassack nach Figur 1,
- Figur 3 eine Längsschnittansicht durch das Gassackmodul bei nicht entfaltetem Gassack gemäß einer ersten Ausführungsform,
- Figur 4 eine Längsschnittansicht durch das erfindungsgemäße Gassackmodul nach Figur 3 im Bereich des Halteteils und des Distanzteils bei entfaltetem Gassack und
- Figuren 5 bis 7 Seitenansichten verschiedener Ausführungsformen des Distanzstücks.

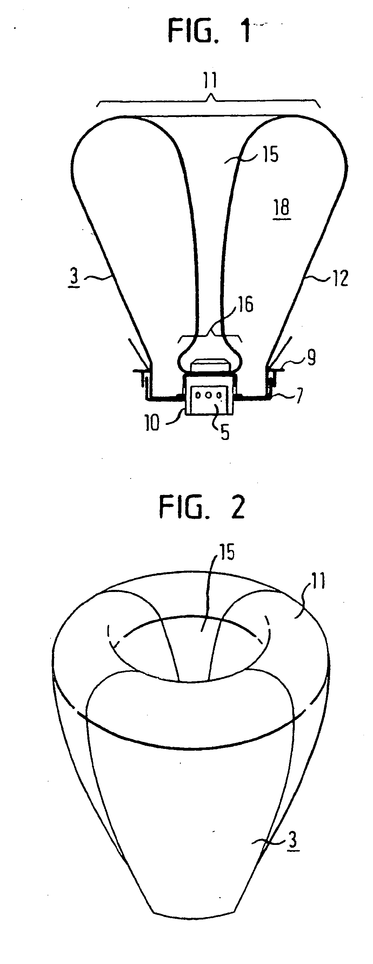

In Figur 1 ist ein Gassackmodul dargestellt, das im Lenkrad oder im Armaturenbrett untergebracht ist. Das Gassackmodul weist einen Gassack 3, einen Gasgenerator 5, ein Modulgehäuse 7 mit einer Modulabdeckung 9 und ein den Gasgenerator umgebendes Halteteil 10 auf. Das Halteteil kann aber beispielsweise auch ein starr am Modulgehäuse 7 befestigter Bügel oder ein anderes funktionsgleiches Teil sein.

Der Gassack 3 hat mehrere Abschnitte, nämlich eine Vorderwand 11, die dem Insassen im aufgeblasenen Zustand zugewandt ist und auf die dieser im Rückhaltefall prallt. Darüber hinaus ist eine Rückwand 12 vorgesehen. Die Vorderwand 11 hat eine zentrische, tiefe Einbuchtung 15, die dadurch gebildet ist, dass ein Abschnitt der Vorderwand 11, im folgenden Zentrumsabschnitt 16 genannt, an jeglicher Bewegung aus dem Modul heraus im Rückhaltefall gehindert wird. Dadurch bekommt der Gassack im aufgeblasenen Zustand seine charakteristische, ringförmige Gestalt mit einer ringförmigen Kammer 18, die den nicht aufgeblasenen Abschnitt, d.h. die Einbuchtung 15, umgibt.

In Figur 2 ist die Gestalt des aufgeblasenen Gassacks näher zu sehen, wobei zu betonen ist, dass die Einbuchtung 15 auch geschlossen sein kann, indem die Gassackabschnitte, die die Einbuchtung bilden, an der Mündung der Einbuchtung aneinander anliegen.

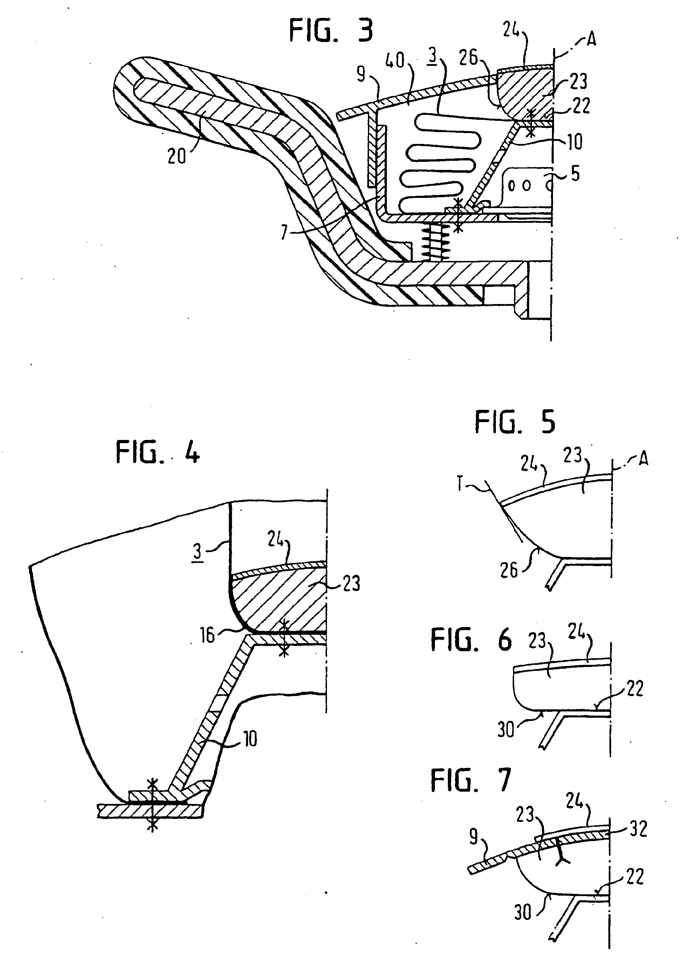

In Figur 3 ist ein Lenkrad 20 mit dem Gassackmodul gut zu erkennen. Die Achse A des Lenkrads ist gleichzeitig der gedachte Mittelpunkt des Moduls. Das Halteteil 10 hat zur Abdeckung 9 hin eine plane Anlagefläche 22. Zwischen der Anlagefläche 22 und der Abdeckung 9 erstreckt sich ein Distanzstück 23 (ein Vollkörper oder ein verrippter Körper), das am Halteteil 10 angeschraubt ist. Zwischen dem Distanzstück 23 und dem Halteteil 10 wird der Zentrumsabschnitt 16 des Gassacks geklemmt. Die Modulabdeckung 9 hat eine zentrische Öffnung, durch die sich das Distanzstück 23 hindurch erstreckt, um von außen sichtbar zu sein. Auf der abdeckungsseitigen Stirnseite des Distanzstücks 23 ist ein großes Metallemblem 24 befestigt.

Das Distanzstück 23 hat eine äußere Mantelfläche 26, die im Längsschnitt, d.h. im gezeigten Schnitt vom Halteteil zur Abdeckung betrachtet, gekrümmt verläuft, und zwar ab dem Abschnitt des Distanzstücks 23, der seitlich gegenüber der Anlagefläche 22 vorsteht. Die konvexe Krümmung ist so ausgeführt, dass vom Halteteil 10 aus zuerst ein kleiner Radius, d.h. eine starke Krümmung vorgesehen ist, die dann immer geringer wird, um schließlich in einem zylindrischen abdeckungsseitigen Ende auszulaufen. Die Mantelfläche 26 ist also zum abdeckungsseitigen Ende hin zunehmend weniger seitlich nach außen geneigt, in der in Figur 3 gezeigten Ausführungsform sogar am abdeckungsseitigen Ende gar nicht mehr nach außen geneigt, sondern verläuft parallel zur Achse A. In dem schräg nach außen und gleichzeitig nach oben verlaufenden Teil seitlich der Anlagefläche 22 ist die Mantelfläche 26 aber konvex gekrümmt.

Der Gassack kann sich beim Entfalten sehr gut entlang der glatten und stetig gekrümmten Mantelfläche bewegen. Auch die auf das Gassackgewebe ausgeübten Kräfte können in diesem Bereich im Vergleich zum Stand der Technik deutlich reduziert werden. Der Gassack wird darüber hinaus im Bereich des Distanzstücks 23 gleichmäßiger belastet.

Auch die Ausrichtung des Gassacks beim Entfalten ist, was den Gassack im Bereich der Einbuchtung 13 anbelangt, fast parallel zur Achse A. Figur 4 zeigt den sich entfaltenden Gassack 3.

Die Figuren 5 bis 7 sollen verschiedene Formen und Krümmungen des Distanzstücks 23 zeigen.

Bei der Ausführungsform nach Figur 5 nähert sich die Tangente T der Mantelfläche 26 zum abdeckungsseitigen Ende hin einer Parallelen zur Achse A, wobei aber die gesamte Mantelfläche 26 gekrümmt verläuft.

Bei den Ausführungsformen nach den Figuren 6 und 7 steht das Distanzstück im Bereich seiner der dem Halteteil 10 zugewandten Stirnseite 30 bereits seitlich gegenüber der Anlagefläche 22 vor.

Die Krümmungen der Mantelflächen 26 werden zum abdeckungsseitigen Ende hin geringer. Bei der Ausführungsform nach Figur 6 ist das abdeckungsseitige Ende ein kurzer zylindrischer Abschnitt, bei der Ausführungsform nach Figur 7 ein geringförmig gekrümmter Abschnitt.

Die Ausführungsform nach Figur 7 unterscheidet sich auch noch von den bisherigen Ausführungsformen darin, dass die Abdeckung 9 über das Distanzstück 23 hinweg verläuft und an diesem befestigt ist. Der zentrische Abschnitt 32 der Abdeckung 9, der auf dem Distanzstück 23 zu liegen kommt, bleibt beim Aufreißen der Abdeckung 9 stationär. Die Abdeckung 9 reißt seitlich des Distanzstücks auf, so dass sich eine ringförmige Austrittsöffnung bildet.

Im nicht entfalteten Zustand (Figur 3) ist der Gassack 3 um das Halteteil 10 und das zentrische Distanzstück 23 herum in einem Ringraum 40 gefaltet untergebracht.

Die Erfindung betrifft insbesondere Gassackmodule, bei denen außenseitig ein metallenes Emblem angebracht ist, welches eine seitliche Ausdehnung hat, die über die seitliche Ausdehnung des Halteteils an dessen abdeckungsseitigen Ende hinausgeht.

Es ist zu betonen, daß die Ausgestaltungen der Abdeckung 9, des Distanzstücks 23 und des Halteteils, die in den einzelnen Figuren dargestellt sind, auch beliebig miteinander kombiniert werden können.

## Patentansprüche

1. Gassackmodul, mit
einem ringförmigen Gassack (3), der im aufgeblasenem Zustand eine ringförmige Kammer (18) hat, die einen zentralen, nicht aufgeblasenen Abschnitt (15) umgibt, und
einer Modulabdeckung (9),
wobei
der Gassack (3) um ein zentrisches Distanzstück (23) herum gefaltet im Modul untergebracht ist, das sich zur Modulabdeckung (9) erstreckt und an seinem, der Modulabdeckung (9) abgewandten Ende an einem Halteteil (10) befestigt ist und sich zum abdeckungsseitigen Ende seitlich nach außen erstreckt,
wobei der seitlich nach außen und zur Modulabdeckung (9) verlaufende Abschnitt des Distanzstücks (23) eine, im Schnitt in Richtung vom Halteteil (10) zur Modulabdeckung (9), gekrümmte äußere Manteloberfläche (26) hat und
wobei das Halteteil (10) eine Anlagefläche (22) für das Distanzstück (23) hat und der gegenüber der Anlagefläche (22) seitlich vorstehende Teil der Mantelfläche (26) konvex gekrümmt verläuft.

2. Gassackmodul nach Anspruch 1, **dadurch gekennzeichnet, dass** die Mantelfläche (26) zum abdeckungsseitigen Ende hin zunehmend weniger seitlich nach außen geneigt ist.

3. Gassackmodul nach Anspruch 1 oder 2, **dadurch gekennzeichnet, dass** die gesamte Mantelfläche (26), von einer dem Halteteil (10) zugewandten Stirnseite des Distanzstücks (23) bis zu der entgegengesetzten abdeckungsseitigen Stirnseite gekrümmt verläuft.

4. Gassackmodul nach einem der vorhergehenden Ansprüche, **dadurch gekennzeichnet, dass** das Distanzstück (23) ein Vollkörper oder ein verrippter Körper ist.

5. Gassackmodul nach einem der vorhergehenden Ansprüche, **dadurch gekennzeichnet, dass** die Modulabdeckung (9) am Distanzstück (23) befestigt ist.

6. Gassackmodul nach Anspruch 5, **dadurch gekennzeichnet, dass** sich das Distanzstück (23) durch eine zentrale Öffnung in der Modulabdeckung (9) nach außen erstreckt.

7. Gassackmodul nach Anspruch 6, **dadurch gekennzeichnet, dass** auf der abdeckungsseitigen Stirnseite des Distanzstücks (23) ein Emblem (24) aus Metall befestigt ist.

8. Gassackmodul nach einem der Ansprüche 1 bis 5, **dadurch gekennzeichnet, dass** sich die Modulabdeckung (9) über die abdeckungsseitige Stirnseite des Distanzstücks (23) erstreckt und ein zentraler Abschnitt der Modulabdeckung (9) beim Aufreißen derselben am Distanzstück (23) befestigt bleibt.

9. Gassackmodul nach einem der vorhergehenden Ansprüche, **dadurch gekennzeichnet, dass** das Halteteil (10) ein einen Gasgenerator (5) umgebender Käfig ist.

## Claims

1. A gas bag module, comprising
a ring-shaped gas bag (3), which in the inflated state has a ring-shaped chamber (18) which surrounds a central, non-inflated section (15), and
a module covering (9),
the gas bag (3) being housed in the module so as to be folded around a centric spacer piece (23) which extends to the module covering (9) and is fastened to a holding piece (10) at its end facing away from the module covering (9) and extends laterally outwards to the end on the covering side,
that section of the spacer piece (23) running laterally outwards and to the module covering (9) having a curved outer shell surface (26) as seen in section in the direction from the holding piece (10) to the module covering (9), and
the holding piece (10) having a contact surface (22) for the spacer piece (23) and the part of the shell surface (26) projecting laterally with respect to the contact surface (22) running in a convex curved shape.

2. The gas bag module according to Claim 1, **characterized in that** the shell surface (26) is inclined increasingly less laterally outwards towards the end on the covering side.

3. The gas bag module according to Claim 1 or 2, **characterized in that** the entire shell surface (26) runs in a curved shape from an end face of the spacer piece (23) facing the holding piece (10) to the opposite end face on the covering side.

4. The gas bag module according to any of the preceding claims, **characterized in that** the spacer piece (23) is a solid body or a ribbed body.

5. The gas bag module according to any of the preceding claims, **characterized in that** the module covering (9) is fastened to the spacer piece (23).

6. The gas bag module according to Claim 5, **characterized in that** the spacer piece (23) extends outwards through a central opening in the module covering (9).

7. The gas bag module according to Claim 6, **characterized in that** an emblem (24) of metal is fastened on the end face of the spacer piece (23) on the covering side.

8. The gas bag module according to any of Claims 1 to 5, **characterized in that** the module covering (9) extends over the end face of the spacer piece (23) on the covering side, and a central section of the module covering (9) remains fastened to the spacer piece (23) when the module covering (9) tears open.

9. The gas bag module according to any of the preceding claims, **characterized in that** the holding piece (10) is a cage surrounding a gas generator (5).

## Revendications

1. Module de coussin à gaz, comportant
un coussin à gaz (3) de forme annulaire qui, à l'état gonflé, possède une chambre (18) de forme annulaire qui entoure un tronçon central (15) non gonflé, et
un couvercle de module (9),
le coussin à gaz (3) étant logé dans le module en étant plié autour d'une pièce d'écartement (23) centrée qui s'étend vers le couvercle de module (9) et qui, à son extrémité détournée du couvercle de module (9), est fixée sur une pièce de retenue (10) et s'étend latéralement vers l'extérieur vers l'extrémité côté couvercle,
le tronçon de la pièce d'écartement (23), qui s'étend latéralement vers l'extérieur et vers le couvercle de module (9), ayant une surface enveloppe (26) extérieure arquée en coupe en direction depuis la partie de retenue (10) jusqu'au couvercle de module (9) et
la partie de retenue (10) ayant une surface d'appui (22) pour la pièce d'écartement (23), et la partie de la surface enveloppe (26) faisant saillie latéralement par rapport à la surface d'appui (22) s'étendant sous forme arquée convexe.

2. Module de coussin à gaz selon la revendication 1, **caractérisé en ce que** vers l'extrémité côté couvercle, la surface enveloppe (26) est de moins en moins inclinée latéralement vers l'extérieur.

3. Module de coussin à gaz selon la revendication 1 ou 2, **caractérisé en ce que** toute la surface enveloppe (26) s'étend sous forme arquée depuis une face frontale tournée vers la partie de retenue (10), de la pièce d'écartement (23), jusqu'à la face frontale opposée côté couvercle.

4. Module de coussin à gaz selon l'une des revendications précédentes, **caractérisé en ce que** la pièce d'écartement (23) est un corps plein ou un corps nervuré.

5. Module de coussin à gaz selon l'une des revendications précédentes, **caractérisé en ce que** le couvercle de module (9) est fixé sur la pièce d'écartement (23).

6. Module de coussin à gaz selon la revendication 5, **caractérisé en ce que** la pièce d'écartement (23) s'étend vers l'extérieur à travers une ouverture centrale dans le couvercle de module (9).

7. Module de coussin à gaz selon la revendication 6, **caractérisé en ce que** sur la face frontale côté couvercle, de la pièce d'écartement (23), est fixé un emblème (24) en métal.

8. Module de coussin à gaz selon l'une des revendications 1 à 5, **caractérisé en ce que** le couvercle de module (9) s'étend sur la face frontale côté couvercle, de la pièce d'écartement (23), et un tronçon central du couvercle de module (9) reste fixé sur la pièce d'écartement (23) lorsque le couvercle de module se déchire.

9. Module de coussin à gaz selon l'une des revendications précédentes, **caractérisé en ce que** la partie de retenue (10) est une cage entourant un générateur de gaz (5).
